# EUROPEAN PATENT SPECIFICATION

(11) **EP 3 588 751 B1**
(45) Date of publication and mention of the grant of the patent: **27.01.2021**
(21) Application number: 18180384.2
(22) Date of filing: 28.06.2018
(51) Int. Cl.: H02K 9/02, H02K 1/27, H02K 1/30

(54) **GENERATOR OF A WIND TURBINE HAVING AN AIR FLOW ADAPTOR**
GENERATOR EINER WINDTURBINE MIT EINEM LUFTSTROMADAPTER
GÉNÉRATEUR D'UNE ÉOLIENNE DOTÉE D'UN ADAPTATEUR D'ÉCOULEMENT D'AIR

(43) Date of publication of application: 01.01.2020
(73) Proprietor: Siemens Gamesa Renewable Energy A/S, 7330 Brande (DK)
(72) Inventor: RafieeArashtnab, Mahsa, 7330 Brande (DK); Soerensen, Peter Hessellund, 8740 Brædstrup (DK)
(74) Representative: Aspacher, Karl-Georg

(56) References cited:
- EP-A1- 2 395 631
- EP-A1- 3 091 640
- JP-A- 2001 339 925
- US-A1- 2012 091 723
- US-A1- 2013 257 195
- US-A1- 2016 276 882

## Description

### Field of invention

The present invention relates to the field of wind turbines. A prior art wind turbine comprises a generator having a rotor and a stator, wherein the rotor is rotated with respect to the stator. The rotor is usually equipped with permanent magnets, while the stator is provided with windings. When the rotor is rotated, the generator produces an AC power. In order to cool the windings, an air gap is provided between the rotor and the stator, in which cooling air is allowed to flow.

### Art Background

EP 2 434 617 A1 discloses a generator having a stator and a rotor, which rotor being rotatable around a center axis and relatively to the stator, and the stator being built of a stator stack comprising a number of adjacently disposed metal plates. The stator comprises a number of stator windings at least partially wound around the metal plates with a certain distance to each other, whereby at least one radial duct-like channel is provided between two or more adjacently disposed metal plates by means of at least one spacer. The spacer is arranged underneath the stator windings in such a manner that the radial duct-like channel is radially open.

However, particularly in direct drive generators, the cooling air can flow into the stator both from the drive end and the non-drive end of the generator. An air flow has to pass through the coils winding head into the air gap (i.e. the distance between stator and rotor). The establishment of sufficient cooling efficiency is one of the main tasks in the design of a generator. One the one hand, a higher cooling capacity allows to increase the generator power output. On the other hand, a good cooling efficiency often requires relative large generator fans.

US 2013/0257195 A1 discloses a generator according to the preamble of claim 1. Another generator is known from US 2012/0091723 A1.

There may be a need for a generator having an improved cooling efficiency without increasing the size of the generator fans.

### Summary of the Invention

This need is met by the subject matter according to claim 1. Further developments are subject of the dependent claims.

According to a first aspect of the invention, there is provided a generator, in particular for a wind turbine, comprising: a stator comprising coil windings; a rotor which is rotatably arranged around the stator and comprises at least one permanent magnet, wherein the coil windings of the stator generate an AC power when the rotor is rotated; an air gap between the stator and the rotor, through which an air flow is allowed to flow, the air gap having an entrance side where air enters the air gap and an outlet side where the air leaves the air gap; and a plurality of air flow adaptors provided on the rotor at the entrance side of the air gap, wherein the each air flow adaptor is configured to alter the air flow in the air gap, wherein the air flow adaptors are juxtaposed in a circumferential direction of the rotor and an arrangement gap is provided between adjacent air flow adaptors, and wherein each air flow adaptor has a radius or a convex shape at its upstream end in the air flow direction when viewed in the radial direction.

Advantageously, the air flow is further smoothened and the pressure loss is further reduced. The pressure drop at the entrance side of the air gap could be eliminated or at least significantly reduced by means of the air flow adaptor. The air flow adaptor smoothens the flow path and therefore reduces the pressure loss at the entrance side of the air gap. In particular, the flow at the entrance side of the air gap can be optimized in a manner that the pressure drop of the flow can be reduced which contributes to the system pressure drop reduction. As a result, more cooling flow can be extracted by use of the same generator fans and the same cooling system. The cooling efficiency or capacity can be increased, which can be translated to a higher generator rated power and AEP improvement.

The air flow adaptor can be configured to alter a velocity and/or a direction of the air flow, and/or the air flow adaptor can be configured to produce the air flow as a laminar flow, wherein the air flow adaptor has a first surface which is substantially flush with a second surface of the stator, wherein the first and second surfaces form the air gap.

Preferably, the air flow adaptor is releasably attached to the rotor or a tip of the at least one permanent magnet. The air flow adaptor can be made of a synthetic resin. The air flow adaptor can have a first surface which is substantially flush with a second surface of the at least one permanent magnet, wherein the first and second surfaces form the air gap. More preferred, the generator may comprise an attachment structure which allows to attach the air flow adaptor in a form-fit manner or a force-fit manner to the rotor, wherein the attachment structure may comprise at least one of a bolt, a rivet, a clip, a fastener, a bracket, and a spring.

Advantageously, it is possible to retrofit already existing wind turbines by such an air flow adaptor without altering the design and without exchanging parts of such already existing wind turbines.

The air flow adaptor comprises at least one of: a shell, a frame, a container or a scoop to accommodate the at least one permanent magnet, and the air flow adaptor is attached to the rotor.

Advantageously, the air flow adaptor can thus accommodate different permanent magnets of different shapes, while the outer shape of the air flow adaptor is kept the same. In addition, different air flow adaptors can be provided for different generators, where the outer shape of the air flow adaptor can be optimized to the dedicated generator to reduce the pressure drop. Last but not least, the air flow adaptor has an additional function to attach the permanent magnet to the rotor.

Assuming that the rotor is rotatable around an axis extending in an axial direction of the generator; an air flow direction of the air flow in the air gap is directed in the axial direction from the entrance side to the outlet side of the air gap; and the air gap has a height from the stator to the rotor in a radial direction perpendicular to the axial direction, a preferred design of the air flow adaptor can be made in that the air flow adaptor is formed such that the height of the air gap is reduced along the air flow direction.

In addition or alternatively to this, the air flow adaptor can comprise, at its upstream end in the air flow direction, a guiding surface for guiding the air flow, the guiding surface comprises a radius in a plane including the axial direction and the radial direction.

A second aspect of the present invention is directed to a wind turbine comprising the generator of the first aspect. It has to be noted that embodiments of the invention have been described with reference to different subject matter. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a wind turbine;
Fig. 2 shows a perspective view of parts of a generator;
Fig. 3 shows a perspective view of parts of the generator according to a first example, not forming part of the present invention;
Fig. 4 shows a perspective view of parts of the generator according to an embodiment, particularly of the air flow adaptor in the shape of a scoop; and
Fig. 5 shows an air flow through the generator according to the first example and the embodiment.

### Detailed Description

The illustrations in the drawings are schematically. It is noted that in different Figures, similar or identical elements are provided with the same reference signs.

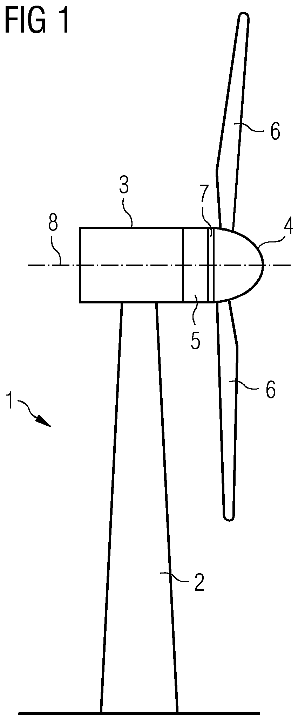

Fig. 1 shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as the yaw axis.

The wind turbine 1 also comprises a hub 4 with three rotor blades 6 (of which two rotor blades 6 are depicted in Fig. 1). The hub 4 is mounted rotatable with regard to the nacelle 3 by means of a main bearing 7. The hub 4 is mounted rotatable about a rotor axis of rotation 8.

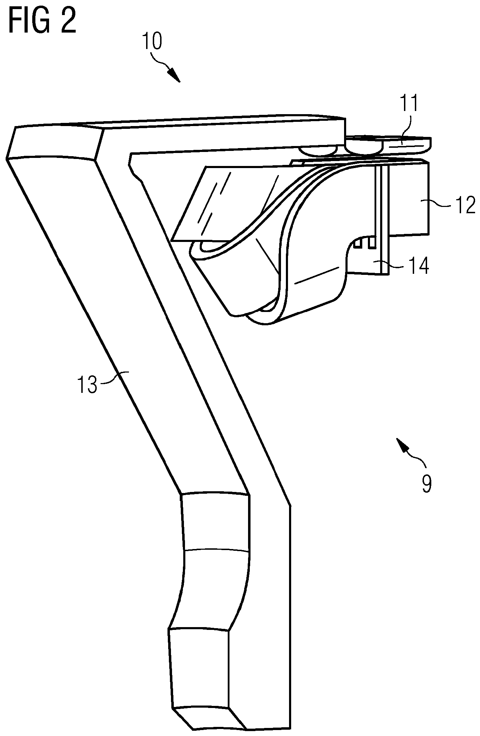

The wind turbine 1 furthermore comprises a generator 5. The generator 5 in turn comprises a rotor 10 (see Fig. 2) connecting the generator 5 with the hub 4. The hub 4 is connected directly to the generator 5, thus the wind turbine 1 is referred to as a gearless, direct-driven wind turbine. Such a generator 5 is referred as direct drive generator 5. As an alternative, the hub 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the hub 4 into electrical energy in the shape of an AC power.

One end of the generator 5 at the hub side is referred as drive end, and the other end of the generator 5 at the nacelle side is referred as non-drive end.

Fig. 2 is a perspective view of parts of the generator 5. The generator 5 comprises a stator 9 and the rotor 10 inside the nacelle 3. The rotor 10 comprises a rotor housing 13, and permanent magnets 11 are arranged in a circumferential direction at the inner surface of rotor housing 13.

The stator 9 comprises a stator yoke (not shown) and a number of parallel teeth 12 extending from the outer surface of the stator yoke. The teeth 12 are arranged with a certain distance from each other to provide a gap or slot for stator windings, which are not shown in Fig. 2. The teeth 12 penetrate a finger plate 14. When the rotor 10 is rotated, electricity is generated in the windings which is accompanied by the generation of heat. In order to dissipate this heat, cooling pipes can be are provided beneath the slots. A coolant like water, oil or a coolant comprising water or oil may flow through the cooling pipe effectively removing the heat. In addition or alternatively to this, the heat is dissipated by an air flow which is described in further details below.

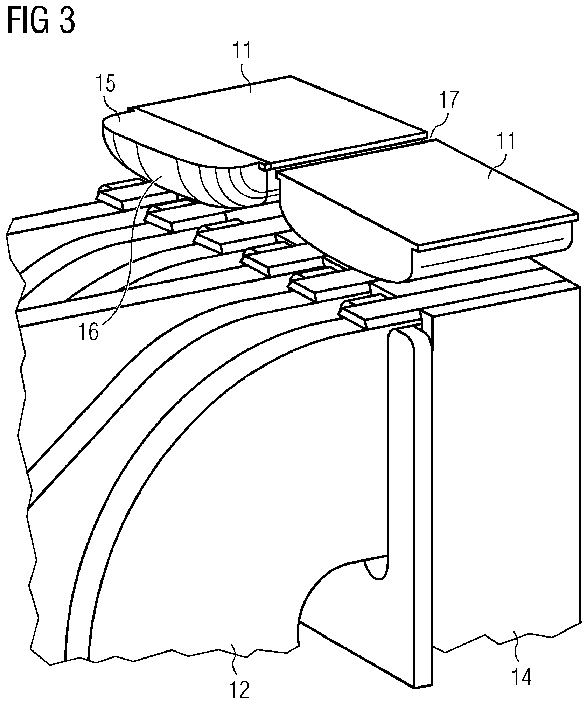

Fig. 3 shows a perspective view of parts of a first example of the generator 5. There is an air gap between the stator 9 and the permanent magnets 11 of the rotor 10, through which the air flow is allowed to flow. The air gap has an entrance side where air enters the air gap and an outlet side where the air leaves the air gap. In some examples, the air flow can flow from the drive-side to the non-drive side. In other embodiments, the air flow can flow from the non-drive side to the drive side. However, in a preferred example, the air flow flows from the non-drive side as well as from the drive side to be merged and discharged through cooling ducts which are arranged in a middle section between the non-drive side and the drive side of the generator 5.

According to the first example, at least one air flow adaptor 15 is provided on the rotor housing 13 of the rotor 10 at the entrance side of the air gap, wherein air flow adaptor 15 is configured to alter the air flow in the air gap. In particular, the air flow adaptor 15 is configured to alter a velocity and/or a direction of the air flow. More particularly, the air flow adaptor 15 is configured to make the air flow laminar. For this purpose, the air flow adaptor 15 has a first surface which is substantially flush with a second surface of the at least one permanent magnet 11, wherein the first and second surfaces form the air gap.

The air flow adaptor 15 is releasably attached to a tip of the permanent magnet 11. The air flow adaptor 15 is made of a synthetic resin, wherein its outer shape is adapted to an outer shape of the permanent magnet 11. The air flow adaptor 15 comprises an attachment structure which allows to attach the air flow adaptor 15 in a form-fit manner to the rotor housing 13. Alternatively, the attachment structure can be formed to attach the air flow adaptor 15 to the rotor housing 13in a force-fit manner. The attachment structure can be formed of synthetic resin and may include metal parts such as springs, bolts, rivets, clips, fasteners, brackets, etc. In each manner, it is possible to retrofit already existing wind turbines 1 by such an air flow adaptor 15 without altering the design and without exchanging parts of such already existing wind turbines 1.

In the following, the specific design of the air flow adaptor 15 of the example is described. The rotor 10 is rotatable around the axis extending in an axial direction 8 of the generator 5. An air flow direction of the air flow in the air gap is directed in the axial direction 8 from the entrance side to the outlet side of the air gap. The air gap has a height from the stator 9 to the rotor 10 in a radial direction perpendicular to the axial direction 8.

The air flow adaptor 15 is formed such that the height of the air gap is reduced along the air flow direction.

As shown in Fig. 3, the air flow adaptor 15 comprises, at its up-stream end in the air flow direction, a guiding surface 16 for guiding the air flow, the guiding surface 16 comprises a radius in a plane including the axial direction 8 and the radial direction.

As shown in Fig. 3, a plurality of air flow adaptors 15 is juxtaposed in a circumferential direction of the rotor 10, an arrangement gap 17 is provided between adjacent air flow adaptors 15, and each air flow adaptor 15 has a radius or a convex shape at its upstream end in the air flow direction when viewed in the radial direction.

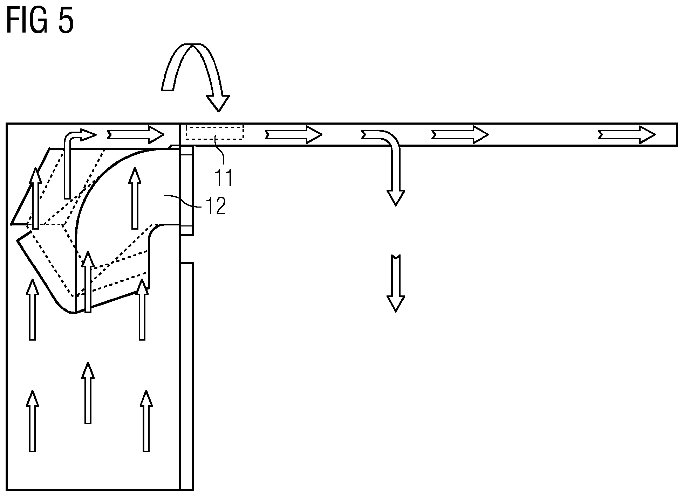

Fig. 5 shows an air flow through the generator, where the air flow is indicated by arrows. First, the air flow vertically flows from the bottom to the top in Fig. 5 through the windings. At the uppermost position in Fig. 5, the air flow is horizontally deflected to flow from the left side to the right side. Thereby, the air flow passes the air gap. The entrance side of the air gap is located at the non-drive side on the left side in Fig. 5, where air enters the air gap. After having passed the air gap, the air flows downwards through cooling ducts which are arranged in a middle section between the non-drive side and the drive side of the generator 5. Although not shown in Fig. 5, a second entrance side of the air gap can be provided at the drive side on the right side in Fig. 5. The air flowing from the non-drive side as well as from the drive side is merged and discharged through the cooling ducts which are arranged in a middle section between the non-drive side and the drive side of the generator 5.

The inventors found out that the pressure in the air gap can drop up to 80 Pa in a prior art generator due to sharp edges of the permanent magnets. The present invention enables to remarkably reduce that pressure drop. The pressure drop at the entrance side of the air gap could be eliminated or at least significantly be reduced by means of the air flow adaptor 15. The air flow adaptor 15 smoothens the flow path and therefore reduces the pressure loss at the entrance side of the air gap. In particular, the flow at the entrance side of the air gap can be optimized in a manner that the pressure drop of the flow can be reduced which contributes to the system pressure drop reduction. As a result, more cooling flow can be extracted by use of the same generator fans and the same cooling system. The cooling capacity can be increased which can be translated to a higher generator rated power and AEP improvement.

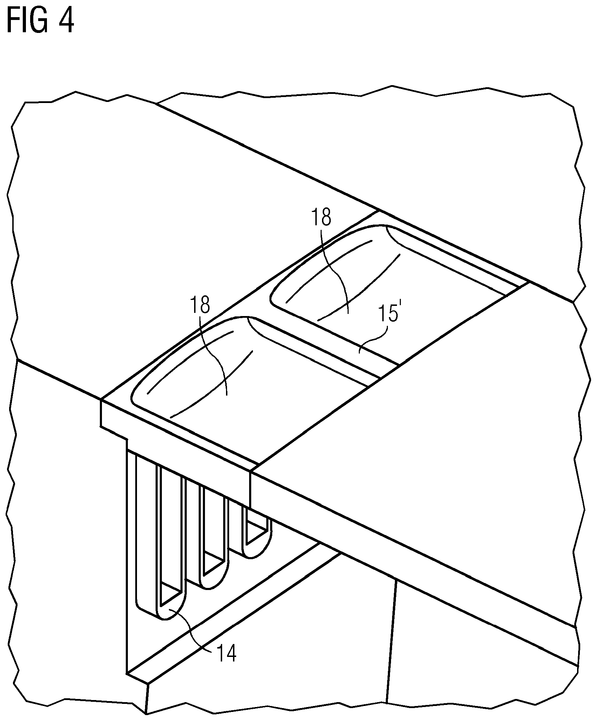

Fig. 4 shows a perspective view of parts of the generator according to an embodiment. The generator of the embodiment has substantially the same features of the generator of the first example. In the following, the differences between the first example and the embodiment are described.

The air flow adaptor 15' includes two scoops 18. Each scoop 18 of the air flow adaptor 15' is configured to accommodate a permanent magnet 11. The air flow adaptor 15' is attached to the rotor housing 13 of the rotor 10. There is a distance between the two scoops 18 corresponding to the arrangement gap 18 between the adjacent permanent magnets 11 of the first embodiment.

Advantageously, the air flow adaptor 15' can accommodate different permanent magnets 11 of different shapes, while the outer shape of the air flow adaptor 15' is maintained. In addition, different air flow adaptors 15' can be provided for different generators, where the outer shape of each air flow adaptor 15' can be optimized to the dedicated generator to reduce the pressure drop. Last but not least, the air flow adaptor 15' has an additional function to attach the two permanent magnets 11 to the rotor housing 13.

It should be noted that the term "comprising" does not exclude other elements or steps and "a" or "an" does not exclude a plurality. Also elements described in association with different embodiments may be combined, within the scope of the invention, which is defined by the claims. It should also be noted that reference signs in the claims should not be construed as limiting the scope of the claims.

## Claims

1. Generator (5), in particular for a wind turbine (1), comprising:
- a stator (9) comprising coil windings;
- a rotor (10) which is rotatably arranged around the stator (9) and comprises at least one permanent magnet (11), wherein the coil windings of the stator (9) generate an AC power when the rotor (10) is rotated;
- an air gap between the stator (9) and the rotor (10), through which an air flow is allowed to flow, the air gap having an entrance side where air enters the air gap and an outlet side where the air leaves the air gap; and
- a plurality of air flow adaptors (15) provided on the rotor (10) at the entrance side of the air gap, wherein each air flow adaptor (15) is configured to alter the air flow in the air gap, wherein the air flow adaptors (15) are juxtaposed in a circumferential direction of the rotor (10) and the air flow adaptors (15) are attached to the rotor (10),
**characterized in that**
an arrangement gap (17) is provided between adjacent air flow adaptors (15), and wherein each air flow adaptor (15) has a radius or a convex shape at its upstream end in the air flow direction when viewed in the radial direction; and
the air flow adaptors (15) comprise at least one of the following, to accommodate the at least one permanent magnet (11): a shell, a frame, a container or a scoop.

2. The generator (5) as set forth in the preceding claim, wherein the air flow adaptors (15) are configured to alter a velocity and/or a direction of the air flow.

3. The generator (5) as set forth in any one of the preceding claims, wherein the air flow adaptors (15) are configured to make the air flow laminar;
wherein the air flow adaptors (15) have a first surface which is substantially flush with a second surface of the stator (9), wherein the first and second surfaces form the air gap.

4. The generator (5) as set forth in any one of the preceding claims, wherein the air flow adaptors (15) are releasably attached to the rotor (10) or a tip of the at least one permanent magnet (11).

5. The generator (5) as set forth in any one of the preceding claims, wherein the air flow adaptors (15) are made of a synthetic resin.

6. The generator (5) as set forth in any one of the preceding claims, wherein
the air flow adaptors (15) comprise an attachment structure which allows to attach the air flow adaptors (15) in a form-fit manner or a force-fit manner to the rotor (10), wherein the attachment structure comprises at least one of a bolt, a rivet, a clip, a fastener, a bracket, and a spring.

7. The generator (5) as set forth in any one of the preceding claims, wherein
the rotor (10) is rotatable around an axis extending in an axial direction (8) of the generator (5);
an air flow direction of the air flow in the air gap is directed in the axial direction (8) from the entrance side to the outlet side of the air gap;
the air gap has a height from the stator (9) to the rotor (10) in a radial direction perpendicular to the axial direction (8);
the air flow adaptors (15) are formed such that the height of the air gap is reduced along the air flow direction.

8. The generator (5) as set forth in the preceding claim, wherein the air flow adaptors (15) comprise, at their upstream end in the air flow direction, a guiding surface (16) for guiding the air flow, the guiding surface (16) comprises a radius in a plane including the axial direction (8) and the radial direction.

9. Wind turbine (1) comprising the generator (5) as set forth in any one of the preceding claims.

## Patentansprüche

1. Generator (5), insbesondere für eine Windenergieanlage (1), der Folgendes umfasst:
- einen Stator (9) mit Spulenwicklungen,
- einen Rotor (10), der drehbar um den Stator (9) herum angeordnet ist und mindestens einen Permanentmagneten (11) umfasst, wobei die Spulenwicklungen des Stators (9) einen Wechselstrom erzeugen, wenn sich der Rotor (10) dreht,
- einen Luftspalt zwischen dem Stator (9) und dem Rotor (10), durch den ein Luftstrom strömen kann, wobei der Luftspalt eine Einströmseite, auf der die Luft in den Luftspalt eintritt, und eine Auslassseite aufweist, auf der die Luft aus dem Luftspalt austritt, und
- mehrere Luftstromadapter (15), die auf der Einströmseite des Luftspalts an dem Rotor (10) vorgesehen sind, wobei jeder Luftstromadapter (15) so konfiguriert ist, dass er den Luftstrom in dem Luftspalt ändert, wobei die Luftstromadapter (15) in Umfangsrichtung des Rotors (10) nebeneinanderliegen und an dem Rotor (10) angebracht sind,
**dadurch gekennzeichnet, dass**
zwischen benachbarten Luftstromadaptern (15) ein Anordnungsspalt (17) vorgesehen ist, und wobei jeder Luftstromadapter (15) bei Betrachtung in radialer Richtung an seinem stromaufwärtigen Ende in Luftströmungsrichtung einen Radius oder eine konvexe Form aufweist, und
die Luftstromadapter (15) mindestens eines der folgenden Elemente zum Aufnehmen des mindestens einen Permanentmagneten (11) umfassen: eine Schale, einen Rahmen, einen Behälter oder eine Mulde.

2. Generator (5) nach dem vorhergehenden Anspruch,
wobei die Luftstromadapter (15) so konfiguriert sind, dass sie eine Geschwindigkeit und/oder eine Richtung des Luftstroms ändern.

3. Generator (5) nach einem der vorhergehenden Ansprüche,
wobei die Luftstromadapter (15) so konfiguriert sind, dass sie dafür sorgen, dass der Luftstrom laminar ist,
wobei die Luftstromadapter (15) eine erste Oberfläche aufweisen, die im Wesentlichen mit einer zweiten Oberfläche des Stators (9) bündig abschließt, wobei die erste und die zweite Oberfläche den Luftspalt bilden.

4. Generator (5) nach einem der vorhergehenden Ansprüche,
wobei die Luftstromadapter (15) lösbar an dem Rotor (10) oder einer Spitze des mindestens einen Permanentmagneten (11) angebracht sind.

5. Generator (5) nach einem der vorhergehenden Ansprüche,
wobei die Luftstromadapter (15) aus einem Kunstharz hergestellt sind.

6. Generator (5) nach einem der vorhergehenden Ansprüche,
wobei die Luftstromadapter (15) eine Befestigungskonstruktion umfassen, die ein Anbringen der Luftstromadapter (15) auf form- oder kraftschlüssige Weise an dem Rotor (10) ermöglicht, wobei die Befestigungskonstruktion einen Bolzen, einen Niet, eine Klammer, ein Verbindungselement, eine Halterung und/oder eine Feder umfasst.

7. Generator (5) nach einem der vorhergehenden Ansprüche, wobei
der Rotor (10) um eine Achse drehbar ist, die sich in axialer Richtung (8) des Generators (5) erstreckt,
eine Luftströmungsrichtung des Luftstroms in dem Luftspalt in axialer Richtung (8) von der Einströmseite zur Auslassseite des Luftspalts geleitet wird,
der Luftspalt in radialer Richtung im rechten Winkel zur axialen Richtung (8) vom Stator (9) bis zum Rotor (10) eine Höhe aufweist,
die Luftstromadapter (15) so ausgebildet sind, dass die Höhe des Luftspalts in Luftströmungsrichtung geringer wird.

8. Generator (5) nach dem vorhergehenden Anspruch,
wobei die Luftstromadapter (15) an ihrem in Luftströmungsrichtung stromaufwärtigen Ende eine Leitfläche (16) zum Leiten des Luftstroms umfassen, die in einer Ebene, die die axiale Richtung (8) und die radiale Richtung enthält, einen Radius umfasst.

9. Windenergieanlage (1) mit dem Generator (5) nach einem der vorhergehenden Ansprüche.

## Revendications

1. Générateur (5), en particulier pour une éolienne (1), comprenant :
- un stator (9) comprenant des enroulements de bobine ;
- un rotor (10) qui est disposé de manière rotative autour du stator (9) et qui comprend au moins un aimant permanent (11), dans lequel les enroulements de bobine du stator (9) génèrent une puissance AC lorsque le rotor (10) est en rotation ;
- un entrefer entre le stator (9) et le rotor (10), à travers lequel un flux d'air est autorisé à circuler, l'entrefer ayant un côté d'entrée où l'air entre dans l'entrefer et un côté de sortie où l'air sort de l'entrefer ; et
- une pluralité d'adaptateurs de flux d'air (15) prévus sur le rotor (10) du côté de l'entrée de l'entrefer, dans lequel chaque adaptateur de flux d'air (15) est configuré pour modifier le flux d'air dans l'entrefer, dans lequel les adaptateurs de flux d'air (15) sont juxtaposés dans le sens de la circonférence du rotor (10) et les adaptateurs de flux d'air (15) sont fixés au rotor (10),
**caractérisé en ce que**
un espace de montage (17) est prévu entre les adaptateurs de flux d'air (15) adjacents, et dans lequel chaque adaptateur de flux d'air (15) a un rayon ou une forme convexe à son extrémité en amont dans le sens de l'écoulement de l'air lorsqu'il est observé dans le sens radial ; et
les adaptateurs de flux d'air (15) comprennent au moins l'un des éléments suivants, pour accueillir le au moins un aimant permanent (11) : une coque, un châssis, un conteneur ou un godet.

2. Générateur (5) tel que défini selon la revendication précédente, dans lequel les adaptateurs de flux d'air (15) sont configurés pour modifier une vitesse et/ou un sens du flux d'air.

3. Générateur (5) tel que défini selon l'une quelconque des revendications précédentes, dans lequel les adaptateurs de flux d'air (15) sont configurés pour rendre le flux d'air laminaire ;
dans lequel les adaptateurs de flux d'air (15) ont une première surface qui est essentiellement à ras d'une seconde surface du stator (9), dans lequel la première et la seconde surface forment l'entrefer.

4. Générateur (5) tel que défini selon l'une quelconque des revendications précédentes, dans lequel les adaptateurs de flux d'air (15) sont attachés de manière détachable au rotor (10) ou à un bout du au moins un aimant permanent (11).

5. Générateur (5) tel que défini selon l'une quelconque des revendications précédentes, dans lequel les adaptateurs de flux d'air (15) sont fabriqués à partir d'une résine synthétique.

6. Générateur (5) tel que défini selon l'une quelconque des revendications précédentes, dans lequel
les adaptateurs de flux d'air (15) comprennent une structure de fixation qui permet de fixer les adaptateurs de flux d'air (15) par complémentarité de forme ou par la force au rotor (10), dans lequel la structure de fixation comprend au moins l'un parmi un boulon, un rivet, un clip, une attache, une bride de fixation, et un ressort.

7. Générateur (5) tel que défini selon l'une quelconque des revendications précédentes, dans lequel
le rotor (10) est rotatif autour d'un axe s'étendant dans un sens axial (8) du générateur (5) ;
un sens de flux d'air du flux d'air dans l'entrefer est dirigé dans le sens axial (8) à partir du côté d'entrée vers le côté de sortie de l'entrefer ;
l'entrefer a une hauteur à partir du stator (9) vers le rotor (10) dans un sens radial perpendiculaire au sens axial (8) ;
les adaptateurs de flux d'air (15) sont formés de sorte que la hauteur de l'entrefer est réduite le long du sens du flux d'air.

8. Générateur (5) tel que défini selon la revendication précédente, dans lequel les adaptateurs de flux d'air (15) comprennent, à leur extrémité en amont dans le sens du flux d'air, une surface de guidage (16) pour guider le flux d'air, la surface de guidage (16) comprend un rayon dans un plan incluant le sens axial (8) et le sens radial.

9. Éolienne (1) comprenant le générateur (5) tel que défini selon l'une quelconque des revendications précédentes.
